# EUROPEAN PATENT SPECIFICATION

(11) **EP 0 536 719 B1**
(45) Date of publication and mention of the grant of the patent: **27.03.1996**
(21) Application number: 92117119.5
(22) Date of filing: 07.10.1992
(51) Int. Cl.: B62J 35/00, B62K 11/04

(54) **Vehicle engine**
Fahrzeug mit Motor
Véhicule à moteur

(30) Priority: 07.10.1991 JP 289332/91
(43) Date of publication of application: 14.04.1993
(73) Proprietor: YAMAHA HATSUDOKI KABUSHIKI KAISHA, Iwata-shi Shizuoka-ken, 438 (JP)
(72) Inventor: Ueda, Hideaki, c/o Yamaha Hatsudoki K.K., Iwata-shi, Shizuoka-ken 438 (JP); Takegami, Masaki, c/o Yamaha Hatsudoki K.K., Iwata-shi, Shizuoka-ken 438 (JP); Nakamura, Kimiaki, c/o Yamaha Hatsudoki K.K., Iwata-shi, Shizuoka-ken 438 (JP)
(74) Representative: Grünecker, Kinkeldey, Stockmair & Schwanhäusser Anwaltssozietät

(56) References cited:
- EP-A- 0 203 244
- JP-A- 2 028 075
- US-A- 4 871 041

## Description

The present invention relates to a vehicle engine with a fuel tank and a fuel pump for supplying fuel to the engine, said fuel pump being accommodated in the interior of said fuel tank and attached to a mounting plate which is detachably mounted onto said fuel tank and closes a fuel tank opening disposed at an upper half of the fuel tank.

There are some types of vehicles such as motorcycles etc. which provide a forced fuel supply from a fuel tank to a combustion chamber of an engine cylinder by a fuel pump. Specifically for motorcycles the disposal of the fuel pump is important to render the tubing uncomplicated and improve the serviceability of the vehicle.

Thus, for example, it is known to dispose the fuel pump below a fuel tank as is shown in JP-A-63-296 76. According to another solution an opening is formed through a bottom wall of the fuel tank installing the fuel pump at the outside of the wall such as to close the opening (JP-A-2-280 75).

As the opening is provided at a lower side wall of the fuel tank it is necessary to discharge the fuel out of the tank and to empty the fuel tank prior to dismounting when the fuel pump is to be dismounted for maintenance operations. The operations for emptying the fuel tank are, however, very troublesome rendering the operations of servicing and maintenance complicated.

EP 0 203 244 A1 shows a fuel pump accommodated in the interior of a fuel tank and attached to a mounting plate detachably mounted onto said fuel tank, as indicated in the preamble of claim 1. Owing to the positioning of the mounting plate and the arrangement of the fuel filter, this known system is however unsatisfactory as regards maintenance and the connecting conduits to the engine.

Accordingly it is an objective of the present invention to provide a vehicle engine of the above-mentioned type having an improved fuel pump arrangement that permits easy and convenient maintenance and a compact connection to the engine .

According to the present invention, the above-objective is performed in that the mounting plate is mounted on a side wall of the fuel tank through bolts from outside and that a fuel filter and a pressure regulating valve which are connected with said fuel pump via a supply hose and a return hose for supplying and returning, respectively fuel from the fuel pump to the fuel filter and from the pressure regulating valve to the fuel pump, are provided outside the fuel tank at the same side thereof as the fuel pump.

Since the fuel filter which has to be cleaned regularly, is disposed outside the fuel tank, maintenance is easily possible. The arrangement of the mounting plate with respect to the positioning of the fuel filter and the pressure regulating valve permits short supply hoses and return hoses between the fuel pump and the fuel filter and the pressure regulating valve respectively.

Preferred embodiments of the present invention are laid down in dependent claims.

In the following, the present invention is explained in greater detail by means of a preferred embodiment thereof in conjunction with the accompanying drawings wherein;
Figure 1 is an overall side view of a motorcycle having an engine according to an embodiment of the present invention,
Figure 2 is a proportionally enlarged partial view similar to Figure 1, and
Figure 3 is a proportional sectional view along the line 3-3 of Figure 2.

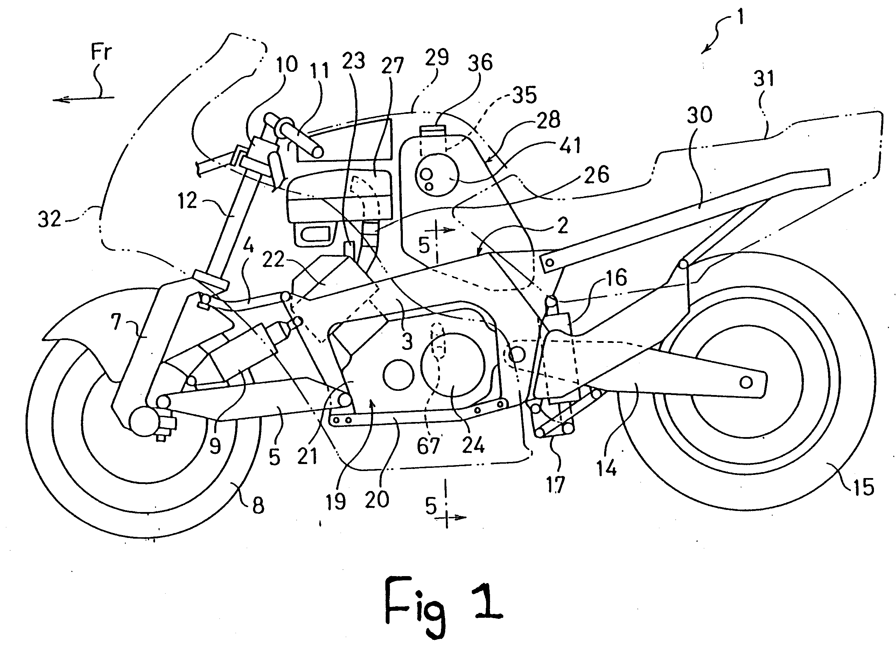

In Figure 1 the reference numeral 1 denotes a motorcycle and the arrow Fr points to a forward driving direction. A body frame 2 of the motorcycle 1 has a main frame 3 in an inverted U-shape in side view. On the main frame 3 upper and lower links 4, 5 for vertical swinging are pivoted whereas on the swinging ends of these links a steering knuckle 7 for steering is supported and a front wheel 8 is rotatably supported at the lower end of the steering knuckle 7. A mid section of the lower link 5 is supported on a front portion of the main frame 3 through a front shock absorber 9 for absorbing shocks that the front wheel 8 receives from the running surface.

A bracket 10 projects upwardly and forwardly from the main frame 3 and a handle bar 11 is supported on the projecting end of this bracket 10. The handle bar 11 and the steering knuckle 7 are connected to each other through a connecting bar 12 and the front wheel 8 is steered by the steering operation of the handle bar 11 through the steering knuckle 7.

A rear arm 14 for vertical swinging is pivoted on the lower rear portion of the main frame 3 rotatably supporting a rear wheel 15 on the swinging end of this rear arm 14. The mid section of the rear arm 14 is supported on the upper rear portion of the main frame 3 through a rear shock absorber 16 and a link mechanism 17 for absorbing shocks the rear wheel 15 receives from the running surface.

A four cylinder engine 19 is supported through the main frame 3. In this case the rigidity of the main frame 3 is increased by detachably connecting the front and rear lower ends of the main frame 3 with each other via a reinforcement frame 20. On the other hand, dismounting of the engine 19 from the main frame 3 is facilitated by detaching the reinforcing frame 20.

The engine 19 comprises a crankcase 21, cylinders 22 projecting upwardly and forwardly from the crankcase 21 and a fuel injection valve 23 mounted on the top of each cylinder 22. A power transmission device 24 is connected to a rear portion of the crank case 21 in order to transmit the power of the engine to the rear wheel 15 for driving the motorcycle 1.

From each cylinder 22 an intake pipe 26 extends upwardly and an air cleaner 17 is connected to the upper ends of said intake pipes 26. Intake air is sucked into the cylinders 22 passing through the air cleaner 27 and the intake pipe 26 successively.

Close behind the air cleaner 27 a fuel tank 28 is positioned and is supported on the main frame 3. A cover body 29 which can be opened from the top, is provided for covering the air cleaner 27 and fuel tank 28.

A seat frame 30 projects rearwardly and upwardly from a rear portion of the main frame 3 and a seat 31 is supported on the seat frame 30. Moreover, a covering 32 made of plastic is provided for covering the vehicle body from the front and from the left and right sides.

In Figures 1-3 the fuel tank 28 is made of sheet metal and has a fuel filler pipe 35 attached on its top surface and is closed by a cap 36. In the lower portion of the fuel tank 28 fuel 37 is stored.

The fuel tank 28 has a substantially circular opening 39 formed through its upper left side wall 38. The reference numeral 41 denotes a fuel pump device comprising a mounting plate 43 to be detachably mounted onto the side wall 38 of the fuel tank 28 from outside through bolts 42, and a fuel pump 44 supported by the mounting plate 43. When the mounting plate 43 is fixed to the side wall 38 of the fuel tank 28, the mounting plate 43 covers the opening 39 and the fuel pump 44 which is inserted into the interior of the fuel tank 28 through the opening 39. The ports for connecting the fuel pump 44 to the delivery and return passageways of the fuel supply and fuel return circuits are provided at the mounting plate 43. Thus, to the suction port of the fuel pump 44 is connected one end of a suction hose 45 while the other end of said suction hose 45 extends toward a bottom portion of the fuel tank 28 therein. A fuel filter 47 is positioned on the left side of the air cleaner 27. On the other hand, a delivery pipe 48 which extends in a left-right transverse direction is installed near the top of the fuel injection valves 23 and each fuel injection valve 23 receives fuel from said delivery pipe 48. Moreover, a pressure regulator valve 49 is installed on the lower side of the fuel filter 47. The delivery port of the fuel pump 44 is connected to the inlet of the fuel filter 47 through a first supply hose 50 and the outlet of this fuel filter 47 is connected to the right end of the delivery pipe 48 through a second supply hose 51. In this case, a left-right section of the supply hose 51 is positioned in a surplus space between the air cleaner 27 and the bracket 10 in front of the air cleaner 27. The left end of the delivery pipe 48 is connected to the inlet of the pressure regulating valve 49 and the outlet of the pressure regulating valve 49 is connected to the return port of the fuel pump 44 through a return hose 53. Both hoses 51, 53 are made of synthetic resin and are flexible.

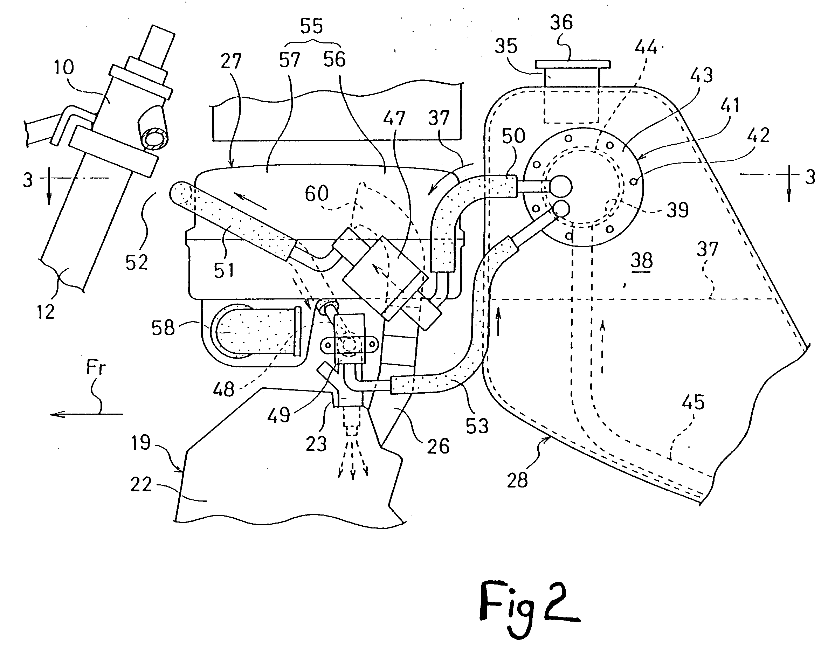

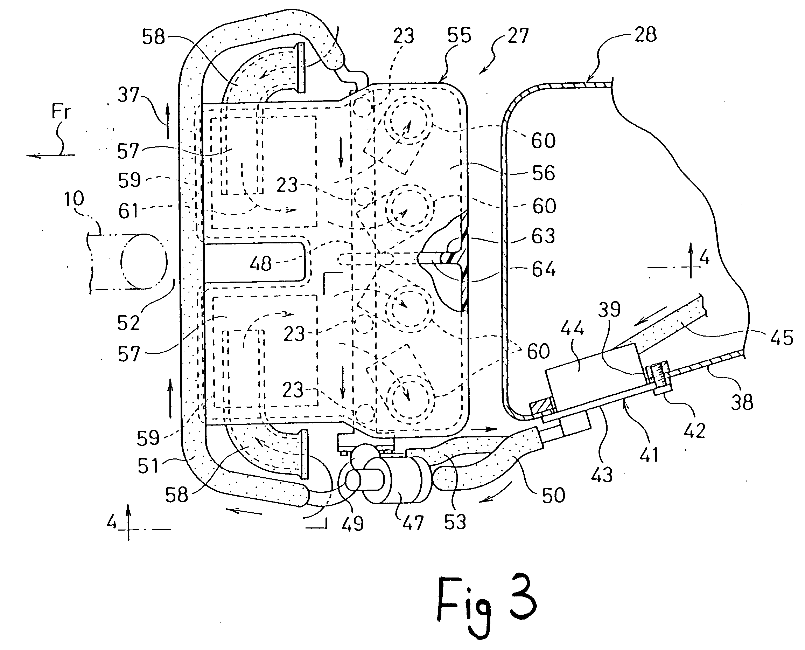

When the fuel pump 44 is operated, as shown by arrows in Figures 2 and 3, fuel 37 is sucked from the bottom portion of the fuel tank 28 into the fuel pump 44, said fuel passing through the fuel filter 47 and the delivery pipe 48 successively to be supplied to each fuel injection valve 23 to become injected into each cylinder 22. The pressure of the fuel in the delivery pipe 48 is regulated by the pressure regulating valve 49.

Excessive fuel 37 left in the delivery pipe 48 is returned to the fuel pump 44 through the return hose 53 and is again supplied to the delivery pipe 48 together with other fuel sucked through the suction hose 45. According to the aforedescribed design, when performing maintenance operations servicing the fuel pump 44, the bolts 42 are loosened and the fuel pump 44 integrally provided with the mounting plate 43 is dismounted from the side wall 38 of the fuel tank 28. In this case, since the opening 39 and the fuel pump device 41 (comprising the mounting plate 43 and the fuel pump 44) are disposed at an upper portion of the fuel tank 28, the fuel 37 in the lower portion of the fuel tank 28 is kept therein even if the opening 39 is opened by dismounting the fuel pump device 41. Therefore, servicing of the fuel pump 44 is facilitated as much as it is not required to empty the fuel tank 28 prior to dismounting the fuel pump device 41. Moreover, since the suction hose 45, the first supply hose 50 and the return hose 53 are all flexible, the fuel pump device 41 can be dismounted with these hoses 45, 50, 53 connected thereto, namely to the mounting plate 43, which also facilitates the servicing and maintenance operations for the fuel pump 44.

## Claims

1. Vehicle engine with a fuel tank (28) and a fuel pump (44) for supplying fuel to the engine, said fuel pump (44) being accommodated in the interior of said fuel tank (28) and attached to a mounting plate (43) which is detachably mounted onto said fuel tank (28) and closes a fuel tank opening (39) disposed at an upper half of the fuel tank (28),
**characterised in that**
said mounting plate (43) is mounted on a side wall (38) of the fuel tank (28) through bolts (42) from outside, and that
a fuel filter (47) and a pressure regulating valve (49) which are connected with said fuel pump via a supply hose (50) and a return hose (53) for supplying and returning, respectively fuel from the fuel pump (44) to the fuel filter (47) and from the pressure regulating valve (49) to the fuel pump (44), are provided outside the fuel tank (28) at the same side thereof as the fuel pump (44).

2. Vehicle engine as claimed in claim 1, **characterised in that** the fuel tank (28) is disposed behind an air intake arrangement including an air filter (27), substantially at about the same height as the pressure regulating valve (49), fuel injectors (23) and the fuel filter (47).

3. Vehicle engine as claimed in claim 1 or 2, **characterised in that** the supply hose (50) is connected to a delivery port of the fuel pump (41) at the mounting plate (43) whereas the return hose (53) is connected to a return port of the fuel pump (41) provided at the mounting plate (43) supporting the fuel pump (41).

## Patentansprüche

1. Fahrzeugmotor mit einem Kraftstofftank (28) und einer Kraftstoffpumpe (44) zur Zuführung von Kraftstoff zu dem Motor, wobei die Kraftstoffpumpe (44) im Inneren des Kraftstofftankes (28) aufgenommen ist und an einer Montageplatte (43) befestigt ist, die lösbar auf dem Kraftstofftank (28) angebracht ist und eine Kraftstofftanköffnung (39) verschließt, die an einer oberen Hälfte des Kraftstofftankes (28) angeordnet ist,
**dadurch gekennzeichnet,** daß
die Montageplatte (43) an einer Seitenwandung (38) des Kraftstofftankes (28) durch Schrauben (42) von außen befestigt ist, und daß
ein Kraftstoff-Filter (47) und ein Druckregulierventil (49), die mit der Kraftstoffpumpe über einen Zuführungsschlauch (50) und einen Rückführungsschlauch (53) jeweils zur Zuführung und Rückführung von Kraftstoff von der Kraftstoffpumpe (44) zu dem Kraftstoff-Filter (47) und von dem Druckregulierventil (49) zu der Kraftstoffpumpe (44) außerhalb des Kraftstofftankes (28) an derselben Seite wie die Kraftstoffpumpe (44) angeordnet sind.

2. Fahrzeugmotor nach Anspruch 1, **dadurch gekennzeichnet,** daß der Kraftstofftank (28) hinter einer Lufteinlaßanordnung angeordnet ist, die einen Luftfilter (27) in im wesentlichen der gleichen Höhe wie das druckregulierende Ventil (49), Kraftstoffeinspritzvorrichtungen (23) und den KraftstoffFilter (47) enthält.

3. Fahrzeugmotor nach Anspruch 1 oder 2, **dadurch gekennzeichnet,** daß der Zuführungsschlauch (50) mit Abgabeöffnung der Kraftstoffpumpe (41) an der Montageplatte (43) verbunden ist, während der Rückführschlauch (53) mit einer Rückführöffnung der Kraftstoffpumpe (41) verbunden ist, vorgesehen an der Montageplatte (43), die die Kraftstoffpumpe (41) lagert.

## Revendications

1. Moteur de Véhicule ayant un réservoir de carburant (28) et une pompe de carburant (44) pour fournir du carburant au moteur, ladite pompe de carburant (44) étant logée à l'intérieur dudit réservoir de carburant (28) et fixée à une plaque de montage (43) qui est montée amovible sur ledit réservoir de carburant (28) et ferme une ouverture de réservoir de carburant (33) disposée sur une moitié supérieure du réservoir de carburant (28),
caractérisé en ce que
ladite plaque de montage (43) est montée sur une paroi latérale (38) du réservoir de carburant (28) via des boulons (42), depuis l'extérieur, et en ce que un filtre de carburant (47) et une soupape de régulation de pression (49) qui sont connectés à ladite pompe via un tuyau d'amenée (50) et un tuyau de retour (53) pour fournir et ramener, respectivement, du carburant depuis la pompe de carburant (44) au filtre de carburant (47) et depuis la soupape de régulation de pression (49) à la pompe de carburant (44), sont prévus à l'extérieur du réservoir de carburant (28) du même côté que la pompe de carburant (44).

2. Moteur de Véhicule selon la revendication 1, caractérisé en ce que le réservoir de carburant (28) est disposé derrière un agencement d'admission d'air comprenant un filtre à air (27), sensiblement à la même hauteur que la soupape de régulation de pression (49), des injecteurs de carburant (23) et le filtre de carburant (47).

3. Moteur de véhicule selon la revendication 1 ou 2, caractérisé en ce que le tuyau d'amenée (50) est connecté à un orifice d'évacuation de la pompe de carburant (41), sur la plaque de montage (43), tandis que le tuyau de retour (53) est connecté à un orifice de retour de la pompe de carburant (41) prévu sur la plaque de montage (43) supportant la pompe de carburant (41).
